# FASCICULE DE BREVET EUROPEEN

(11) **EP 0 511 277 B1**
(45) Date de publication et mention de la délivrance du brevet: **29.09.1993**
(21) Numéro de dépôt: 91902998.3
(22) Date de dépôt: 18.01.1991
(51) Int. Cl.: A23C 9/144, A23J 1/20

(54) **PROCEDE DE TRAITEMENT DU LAIT ECREME**
MAGERMILCHBEHANDLUNGSVERFAHREN
PROCESS FOR THE TREATMENT OF SKIMMED MILK

(30) Priorité: 19.01.1990 FR 9000633
(43) Date de publication de la demande: 04.11.1992
(73) Titulaire: SOCIETE VIDAUBANAISE D'INGENIERIE, F-83550 Vidauban (FR)
(72) Inventeur: NOEL, Roland, F-83550 Vidauban (FR)
(74) Mandataire: Robert, Jean-Pierre
(86) Numéro de dépôt international: FR9100028
(87) Numéro de publication internationale: WO9110366

(56) Documents cités:
- EP-A- 0 165 105
- EP-A- 0 173 999
- CH-A- 470 141
- FR-A- 2 418 627
- FR-A- 2 433 304
- FR-A- 2 514 615
- GB-A- 2 100 289
- Chemical Abstracts, vol. 27, 1933, page 3534, Colombus, Ohio, US; J. Kato: "Manufacture of casein and lactose by electrodialysis", & J. Soc. Chem. Ind., Japan 36, Suppl. Binding 158-9 (1933)

## Description

L'industrie laitière regroupe tous les procédés de traitement du lait pour en séparer les divers constituants et en permettre leur valorisation individuelle.

La présente invention concerne l'industrie laitière et plus particulièrement l'industrie du lait écrémé dans ses deux principaux constituants, la caséine et le lactosérum.

La caséine trouve son application la plus valorisante dans l'industrie alimentaire. On s'en sert pour tenter d'augmenter la qualité nutritionnelle des aliments. Bien souvent cependant ces utilisations sont limitées à l'adjonction de charges commestibles.

Le lactosérum a pour constituant principal le lactose qui trouve de nombreux débouchés non seulement dans l'industrie alimentaire, mais également dans l'industrie pharmaceutique ou parapharmaceutique. Ce lactosérum comporte également des protéines (sériques) qu'il peut être intéressant de valoriser.

Il existe plusieurs manières de séparer la caséine du petit lait. Le procédé par lequel est traité le volume de lait le plus important est dit voie acide et consiste à incorporer un acide (chlorhydrique notamment) dans le lait pour atteindre un pH (de l'ordre de 4,5) auquel la caséine flocule et peut être séparée du petit lait restant (lactosérum). Cette technique présente de nombreux inconvénients. En effet, quels que soient les réactifs utilisés (Acides chlorhydrique ou sulfurique), ceux-ci ne sont jamais exempts de métaux lourds et autres produits toxiques qui sont alors introduits dans le lait. En outre, l'adjonction d'un acide fort dans un milieu biologique noble n'est pas une opération satisfaisante pour l'esprit et provoque une destabilisation ionique de la caséine du fait de l'augmentation de la force ionique du milieu. La caséine obtenue a donc perdu ses caractéristiques phospho-calciques et ne peut plus constituer de la caséine native, c'est-à-dire une caséine ayant conservé toutes ses propriétés.

Une seconde technique consiste à obtenir la caséine par fermentation du lait pour la production d'un milieu acide par génération d'acide lactique. Bien que cette technique soit plus noble que la précédente, s'agissant d'une biotechnique, l'action fermentaire modifie profondément la structure des protéines présentes dans la caséine. Ici non plus la caséine obtenue ne peut plus être qualifiée de caséine native.

On mentionnera également une autre technique de production de caséine par la voie enzymatique : il s'agit de la caséine présure. On constate, comme dans le cas précédent que la réaction enzymatique affecte la structure des protéines de la phase caséine. La caséine est de plus insoluble, ce qui rend plus difficile le ou les traitements et utilisations ultérieurs.

Tous ces modes de production procèdent par introduction d'un corps étranger dans le lait, qui est la première raison de l'impossibilité d'isoler la caséine du lait sans modification de ses structures.

Une dernière technique consiste à acidifier le lait par traitement sur résines échangeuses d'ions. Le principe de cette technique est intéressant dans le sens qu'il supprime théoriquement cette adjonction de corps étrangers, mais sa mise en oeuvre présente de nombreux inconvénients. On constate en effet une perte de matière importante retenue par les résines qui s'encrassent et se saturent rapidement. Le processus ne peut pas être maitrisé du point de vue microbiologique et la régénération des résines par des acides forts est une cause d'introduction dans le lait de produits toxiques, tels que les métaux lourds.

Outre les inconvénients brièvement rappelés de ces procédés en ce qui concerne la caséine, ces procédés ont des incidences non négligeables sur l'autre sous-produit qui est le petit lait (ou lactosérum) en rendant plus difficile ou plus onéreuse sa valorisation.

Dans le cas des lactosérums issus de la voie acide, la teneur en matière minérale augmente proportionnellement à la quantité d'acide étranger ajoutée. Ce dernier est donc impropre à une utilisation directe et il faut mettre en oeuvre des technologies complexes (traitement de déminéralisation suivis de procédés de filtration et de concentration) pour obtenir un produit présentant un intérêt économique.

Pour ce qui concerne les lactosérums, sous-produits de la caséine lactique, la présence d'acide lactique est un facteur rédhibitoire pour toute technologie de traitement ultérieur. En outre, la fermentation lactique a consommé du lactose au détriment de celui qui constitue un produit de valorisation du lactosérum.

Enfin, le lactosérum issu de la voie de traitement enzymatique nécessite un traitement thermique important pour inhiber l'activité enzymatique résiduelle, ce traitement thermique affectant les qualités des protéines sériques qui constituent également un constituant valorisant du lactosérum.

La présente invention entend proposer un procédé de traitement du lait par lequel il est possible d'extraire ses différents constituants de manière optimale, c'est-à-dire d'une part avec leurs propriétés initiales conservées et, d'autre part dans des conditions d'extraction rentables sur le plan économique.

A cet effet, l'invention a donc pour objet un procédé de traitement du lait écrémé pour en extraire les différents constituants qui comprend une première phase d'acidification du lait par électrodialyse à basse température, dans un électrodialyseur à trois compartiments jusqu'à obtenir un pH de l'ordre de 5 ou 2,8. Pour endre la conduite industrielle du procédé plus sûre, on procèdera à une acidification limitée par exemple à pH5 dans cet électrodialyseur et à une acidification complémentaire d'au moins une fraction d'un batch issu du premier électrodialyseur dans un second électrodialyseur à trois compartiments jusqu'à obtenir un pH de 2,8 environ.

Cette première phase a pour effet d'éliminer du lait ses cations libres (sodium, potassium, magnésium...) par échange cationique au travers des membranes de l'électrodialyseur à trois compartiments. Les cations sont remplacés par des ions hydrogène. Il faut noter à cet égard que seuls les cations libres du lait (ou associés à des acides faibles) seront extraits du lait. Le calcium lié ou combiné avec le phosphate organique et la caséine ne sera pas extrait. Cette préservation est importante, car elle constitue la sauvegarde de propriétés essentielles de la caséine native.

Un second intérêt de cette acidification réside dans l'amélioration de la protection microbiologique qu'elle confère au lait, pendant les phases suivantes de son traitement.

Une acidification en deux étapes est avantageuse du point de vue de la maîtrise des réactions. On sait en effet qu'à pH de 4,6 environ, la caséine est à un point sensible de la structure (point isoélectrique) où elle tend à floculer. C'est cependant aux environs de ce point qu'il convient de la porter pour que son extraction du lait puisse s'opérer. Le procédé selon l'invention propose, pour parvenir à ce résultat, tout en évitant une floculation et des précipitations dans les cellules d'électrodialyse, de procéder en deux étages, le second étage n'intéressant qu'une fraction du lait traité ce qui permet de limiter les risques de blocage technologique de l'électrodialyse au moment où le point isoélectrique de la caséine est atteint. En effet, le second étage d'électrodialyse fait passer le lait du pH5 au pH 2,8 environ, sans trop de difficultés car la quantité de lait étant moins importante, ce point est rapidement passé et si une coagulation peut se produire la propriété des protéines à être amphotère permet une redissolution des précipités dès que le pH descend.

On notera à ce propos qu'il n'est pas intéressant d'abaisser le pH à une valeur inférieure à 2,8 car le rendement de fonctionnement de l'électrodialyseur s'en trouverait fort affecté et les équilibres phosphocalciques de la caséine menacés.

Dans sa forme la moins élaborée, le procédé selon l'invention peut consister à procéder au mélange des laits acides obtenus par les deux électrodialyseurs, de sorte que le mélange final soit maintenu dans des conditions de pH, de température et pendant un temps déterminé, propres à l'extraction de la caséine par une méthode classique. On prendra ici la précaution d'assurer une homogénéité parfaite du mélange au cours de sa préparation pour éviter la formation de gradients de pH, ce qui conduirait à s'éloigner localement des conditions du point isoélectrique avec, en conséquence, une diminution de la quantité globale de matière extraite et une favorisation d'hydrolyses mineures au moment des traitements thermiques ultérieurs qui affectent le goût du produit.

La caséine produite dans ces conditions ne peut pas être qualifiée de native, mais présente certainement des qualités supérieures aux caséines obtenues par voie acide. En particulier, les protéines n'ayant pas subi l'action agressive de l'acide, leur structure en est moins perturbée. En conséquence, on constate moins de pertes donc un bilan matière plus favorable, la caséine ayant par ailleurs conservé la majeure partie de ses liaisons phosphocalciques.

Il est intéressant de noter que le lactosérum qui résulte de la production de la caséine, est un lactosérum aux alentours de pH 4,6 partiellement déminéralisé par le passage dans les électrodialyseurs, et que l'on peut diménéraliser encore plus en le faisant passer sur une résine cationique forte. Le pH du lactosérum, qui est alors fortement décationé, est compris entre 1 et 2. Il **peut** alors servir utilement de milieu acide dans les électrodialyseurs, d'où il sort à un pH supérieur à 5 après avoir perdu une grande partie de ses anions. Ce lactosérum neutralisé peut être plus facilement valorisé qu'un lactosérum acide classiquement dérivé par la voie acide de production de caséine. On comprend que cette particularité du procédé de l'invention permet d'obtenir une optimisation économique de la production.

Dans une forme plus élaborée du procédé de l'invention, on procède à l'électrodialyse dans un seul étage d'électrodialyseur à trois compartiments de la totalité du lait traité, de sorte que le lait est porté à un pH de l'ordre de 2,8. Il peut être cependant avantageux de procéder à cette acidification en deux étapes.

On peut, pour ce faire, procéder de deux manières. La première consiste à partir d'un lait à pH 5 issu du premier étage à favoriser le passage du point isoélectrique à l'intérieur du second électrodialyseur à trois compartiments en recyclant dans ce dernier la totalité du batch jusqu'à obtention du pH 2,8 environ. La seconde consiste à préparer le batch de lait à pH 5 et à le mélanger avant le second électrodialyseur à un lait à pH 2,8 afin d'obtenir un batch de lait à pH 4 environ, à l'entrée du second électrodialyseur.

Le lait ainsi traité est soumis à une filtration fractionnée au moyen de laquelle on extrait dans un premier étage d'ultra filtration le lactose, dans un second étage de micro et diafiltration les protéines sériques et dans un dernier étage de concentration par ultra filtration le lactose résiduel.

Au sortir de cet étage de filtration, le rétentat est essentiellement constitué de caséine native soluble à un pH de l'ordre de 3 à 4, compte tenu des pertes de cations lors de la filtration et du recomplément en eau lors de la diafiltration.

La neutralisation de ce rétentat pour obtenir des produits ph 5 à 7 est ensuite réalisée au moyen d'un électrodialyseur à deux compartiments dans lequel on réalise une désanionisation du lait. Le passage du point isoélectrique de la caséine peut être accéléré par l'adjonction d'une solution basique.

Le filtrat des étages d'ultra filtration, est lui aussi déminéralisé d'une part au moyen d'une résine cationique forte et, d'autre part, au moyen des électrodialyseurs trois compartiments dans lesquels ce perméat est introuduit comme milieu acide (à pH entre 1 et 2) et d'où il ressort neutralisé et désanionisé.

Il est alors dans une condition extrêmement propice à une exploitation industrielle immédiate (lactose première cristallisation, notamment).

Le filtrat de la phase micro et dia filtration est quant à lui concentré en protéines sériques à un taux de l'ordre de 35 % (sur extrait sec) qui en permet une utilisation en tant que tel.

L'invention sera mieux comprise au cours de la description donnée ci-après des différentes étapes du procédé qu'elle concerne qui permettra d'en faire apparaitre les avantages et les caractéristiques secondaires.

Il sera fait référence aux dessins annexés dans lesquels :
- la figure 1 illustre la phase d'acidification du lait à traiter,
- la figure 1A est un schéma d'une cellule d'électrodialyseur trois compartiments,
- les figures 2 et 3 sont des schémas illustrant les possibilités de l'invention pour obtenir un lait acide aux alentours de pH 2,8,
- la figure 4 est une schéma illustrant la phase de filtration du lait acide en vue d'en séparer les divers constituants,
- la figure 5 est un schéma fonctionnel d'ensemble d'une installation mettant en oeuvre le procédé selon l'invention.

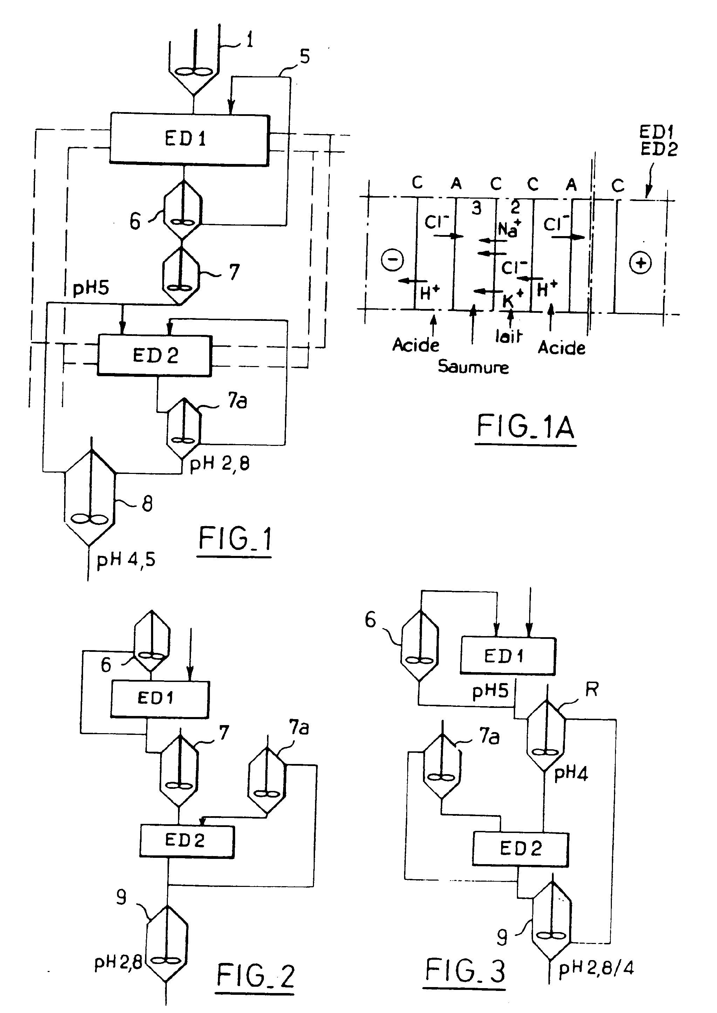

Sur la figure 1 on a représenté en 1 un réservoir qui contient un "batch" (un volume déterminé) de lait écrémé de préférence maintenu à 4°C, ne serait-ce que pour limiter le développement microbiologique. Cette quantité de lait se présente à un pH de l'ordre de 6,5 à 7 donc dans des conditions proches de la neutralité. Le lait est introduit à partir du réservoir 1 dans un électrodialyseur ED1 d'acidification par échange de cations avec des ions hydrogènes. La figure 1A illustre schématiquement les phénomènes ioniques se déroulant dans ce type d'appareil qui est connu en lui-même. Brièvement décrit, un tel électrodialyseur dit à trois compartiments, comporte un empilement de membranes anioniques A et cationiques C dans lequel deux membranes cationiques C consécutives sont encadrées par deux membranes anioniques A. Cet empilement est placé entre deux électrodes de sorte que, sous l'application d'un courant continu, les cations des liquides contenus dans les compartiments tendent à migrer vers la cathode (-) et les anions vers l'anode (+) tant qu'ils ne sont pas retenus par une membrane respectivement anionique et cationique qui les en empêche.

Pour l'acidification du lait qui circule entre deux membranes cationiques dans le compartiment 2, on fait encadrer cette circulation par une saumure (compartiment 3) côté cathode et un acide côté anode (compartiment 4) de sorte que la saumure s'enrichit des cations du lait qui lui-même s'enrichit des ions hydrogène venant de la solution acide. On parvient ainsi à acidifier le lait sans introduire de cations étrangers dans ce dernier. En outre, les cations qui quittent le lait sont généralement les cations (calcium, sodium, potassium, magnésium...) des sels qui ne sont pas liés aux protéines de la caséine (les sels phosphocalciques). Les forces ioniques sont en effet suffisamment faibles pour ne pas rompre ces liaisons. En revanche, cette électrodialyse permet l'élimination des métaux lourds qui auraient pu être présents dans le lait du fait d'une pollution des aliments de l'animal (notamment de type radioactif). Le milieu acide en circulation peut être de l'acide chlorhydrique.

Cette électrodialyse du batch s'opère par recyclage du lait comme l'indique le trajet 5 jusqu'à ce que l'on ait obtenu un pH dans le réservoir 6 de l'ordre de 5. On a ainsi évité d'atteindre le point isoélectrique de la caséine (autour de pH 4,6) et donc une précipitation et un dépôt le long des membranes de l'électrodialyseur. Ce batch est ensuite transféré dans un bac tampon 7.

Une portion de ce lait à pH 5 est ensuite circulée dans un second électrodialyseur à trois compartiments ED2 sur lequel elle est recyclée rapidement pour porter son pH aux environs de 2,8. Le passage du point isoélectrique de la caséine s'opère dans l'électrodialyseur ED2 le plus rapidement possible, afin de limiter la floculation et les risques du blocage du système. Etant donné le caractère amphotère des protéines, les dépôts qui auraient pu s'opérer dans ED2 sont dissous par le lait dès qu'il a passé le point isoélectrique. Ainsi une certaine proportion (par exemple 20 %) de la quantité de lait initiale est-elle portée à pH 2,8 et rassemblée dans un réservoir 7a à cet effet. On procède ensuite au mélange des deux laits ainsi obtenus provenant des réservoirs 7 et 7a.

Ce mélange sera effectué avec soin et dans des conditions de brassage et de circulation précises pour obtenir un lait de pH inférieur au point isoélectrique ne présentant que de la caséine solubilisée. Ce lait, par exemple à pH 4,5 est stocké dans un réservoir 8 d'où il peut être extrait pour subir un traitement classique pour séparer la caséine du lactosérum. La caséine ainsi obtenue a conservé une grande partie de ses propriétés initiales. Elle présente donc des qualités supérieures aux caséines classiques obtenues par voie acide et peut constituer un substitut aux caséines présure (voie enzymatique) pour, par exemple, l'industrie fromagère relative aux fromages fondus.

En outre, le lactosérum résultant de la séparation de la caséine est intéressant dans le fait qu'il est déminéralisé partiellement. On considère qu'environ 45 % des sels minéraux ont été extraits par le procédé selon l'invention, ce qui est très avantageux en comparaison du lactosérum surminéralisé résultant de la voie acide connue.

En première conclusion, ayant rappelé qu'environ 80 % de la caséine produite en Europe l'est par voie acide, cette première phase du procédé de l'invention constitue une alternative économiquement intéressante à la production de caséine par voie acide dont les autorités souhaitent voir les quantités diminuer.

Bien que ce procédé présente déjà des avantages par rapport à l'état de la technique, il comporte des prolongements comportant d'autre qualités.

L'un de ces premiers prolongements réside dans le fait qu'il permet d'obtenir un lait très en-dessous du point isoélectrique, entre pH 4 et pH 2,8, par exemple.

On peut par exemple faire circuler et recycler la totalité du batch contenu dans le réservoir 1 uniquement sur l'électrodialyseur trois compartiments ED1, jusqu'à atteindre dans le réservoir 6 un pH égal à 2,8. Il convient dans ces conditions de maitriser la conduite de l'installation au niveau des débits, pour éviter les colmatages au passage du point isoélectrique du lait en cours d' acidification. L'installation de la figure 1 peut alors ne plus comporter de second électrodialyseur, si on souhaite ne produire qu'un lait à pH 2,8.

La figure 2 est une alternative à l'installation ne comportant qu'un seul électrodialyseur ayant l'avantage d'une plus grande facilité de conduite. La totalité du batch de traitement passe sur le premier électrodialyseur ED1 puis sur le second ED2 afin d'obtenir dans le réservoir 9 un lait très acide. En opérant ainsi, en deux étages d'électrodialyse, on diminue très sensiblement le risque de blocage du système au passage du point isoélectrique de la caséine dans l'électrodialyseur ED2. On peut, en effet, procéder progressivement pour disposer en recyclage d'un lait en dessous de ce point isoélectrique qui dissout les dépôts qui auraient pu se former dans les cellules lors du passage du point isoélectrique. Le fonctionnement de ce double étage d'électrodialyse requiert simplement une bonne maîtrise des paramètres de débit et un contrôle permanent de l'évolution du pH.

La figure 3 est une alternative à la figure 2 donc également à une installation à un seul étage d'électrodialyse, pour procéder à l'acidification d'un batch au-dessous du pH corresondant au point isoélectrique de la caséine. Cette alternative présente une sécurité de fonctionnement accrue par rapport à la figure 2, mais implique une installation plus compliquée. Ainsi à la sortie de l'électrodialyseur ED1 le lait à pH 5 est mélangé dans un réservoir R avec une fraction du lait à pH 2,8 issu de l'électrodialyseur ED2 et détourné du traitement du batch précédent. Le passage du point isoélectrique s'opère alors en amont de l'électrodialyseur ED2 dans le réservoir R. Les quantités relatives mélangées sont telles que le lait entrant dans ED2 est aux environs de pH 4. Le risque de précipitation dans ED2 est limité au premier batch traité. Les techniques de mélange des deux laits seront particulièrement soignées pour empêcher une coagulation de la caséine qui subirait des altérations se révélant au cours du traitement ultérieur.

On peut donc, avec le procédé selon l'invention, disposer d'un lait dont le pH est de 2,8. Cette caractéristique est intéressante à plusieurs titres. Tout d'abord, comme il y a eu plus d'échange cationique, le lait est déminéralisé de façon plus poussée. On considère que le taux de déminéralisation par cette électrodialyse est de l'ordre de 60 à 65 %. En outre un lait aussi acide est dans de bonnes conditions de protection microbiologique et les protéines sont dans un état hydrophile favorable pour leur protection notamment contre les chocs thermiques.

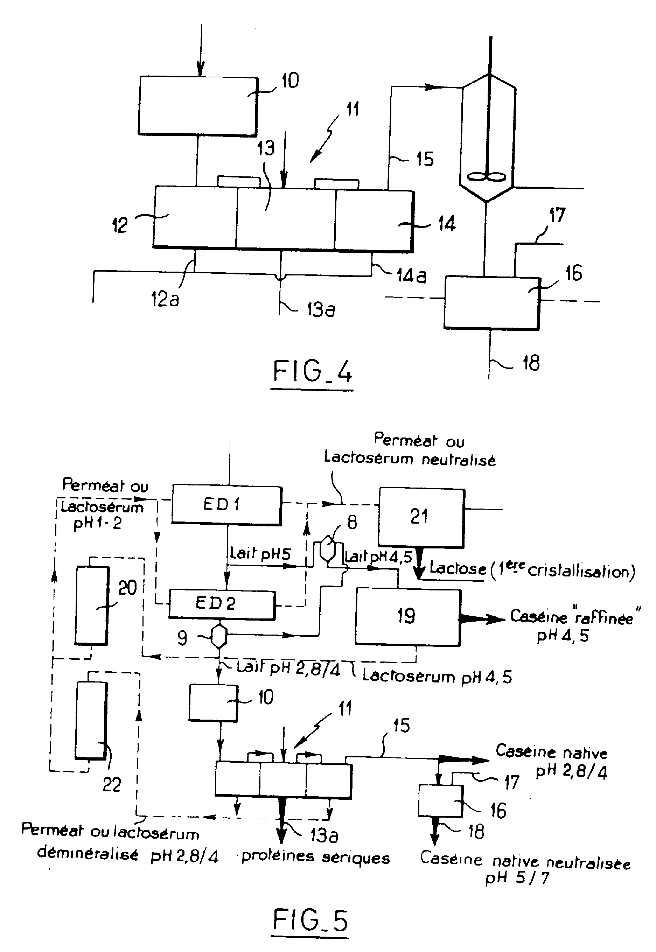

Un tel lait acide peut donc subir un traitement thermique de stérilisation. La figure 4 illustre cette unité 10 de traitement thermique dans laquelle arrive le lait à pH 2,8.

Le batch de lait stérilisé est ensuite conduit dans une unité 11 de filtration pour séparer la caséine du lactosérum et ce, de manière sélective. Dans un premier étage 12, on procède à une ultrafiltration du lait acide au moyen de laquelle on recueille le lactose en tant que filtrat 12a. Dans un second étage 13 on procède à une micro-filtration/ diafiltration du rétentat de l'étage 12 qui permet de recueillir en 13a les protéines sériques. Il faut noter que l'ultrafiltration préalable permet l'obtention d'un filtrat 13a concentré en protéines sériques (de l'ordre de 35 % sur extrait sec)immédiatement exploitable commercialement. Enfin la microfiltration/diafiltration est suivie d'une seconde ultrafiltration 14 pour parfaire l'extraction 14a du lactose de la caséine. Le rétentat 15 de l'étage 11 est donc essentiellement constitué de caséine soluble à pH entre 2,8 et 4. Cette caséine peut être qualifiée de native car les traitements qu'elle a subi n'ont pas modifié sa structure originelle.

La valorisation commerciale est immédiate. Elle constitue tout d'abord un produit d'addition au lait qui permet d'éliminer tous les traitements d'ultrafiltration des laits pauvres en matière azotée à destination fromagère.

Il suffit en effet d'additionner cette caséine aux laits à enrichir pour augmenter sensiblement le rendement fromager. Cette caséine native est une solution immédiate aux problèmes de standardisation du lait qui sont aujourd'hui mal résolus par les techniques d'ultrafiltration employées. En effet l'ultrafiltration du lait est difficile à mener compte tenu des colmatages fréquents des membranes, des risques de fermentation et de développement microbiens qu'elle comportent des permeats générés difficilement valorisables.

Il peut être utile de disposer d'une caséine neutralisée. Pour ce faire, on peut faire passer le rétentat 15 (caséine à pH 2,8 à 4) dans un électrodialyseur deux compartiments 16, connu en lui-même, qui permet d'extraire du milieu les ions hydronium et les anions résiduels. Cette électrodialyse ayant pour effet de remonter le pH, on parvient au point isoélectrique de la caséine qu'il convient de passer rapidement afin d'éviter les précipitations au sein de l'électrodialyseur. Il est avantageux de prévoir à ce moment un ajout de soude 17 (ou autre base) dans le flux électrodialysé qui, augmentant la charge électrique, permet une meilleure conductivité du milieu tout en permettant une dissolution des éventuelles précipitations sur les membranes de l'électrodialyseur 16. On notera que la quantité de soude ajoutée est minimisée compte tenu de la faible minéralisation de la solution de caséine à pH 4,5 et les ions sodium ajoutés sont immédiatement extraits de la solution par l'électrodialyseur. Le produit en sortie 18 de cet électrodialyseur est une caséine neutralisée et soluble que l'on peut sécher et qui est incorporable sous forme de poudre dans tout lait à enrichir en matière azotée puisqu'elle a conservé ses propriétés originelles.

Sur la figure 5 on a représenté schématiquement les différentes étapes du procédé selon l'invention, que l'on peut mettre en oeuvre de manière sélective comme cela a été expliqué plus haut. On retrouve sur cette figure certains des éléments déjà décrits avec les mêmes références.

Ainsi 19 représente une unité de traitement du lait à pH 4,5 sortant du réservoir 8 (figure 1) pour séparer la caséine du lactosérum. La caséine obtenue à pH 4,5 est une caséine "raffinée" dont une utilisation peut être envisagée par exemple comme un substitut de la caséine présure. Le lactosérum à pH 4,5 partiellement déminéralisé est passé sur une résine cationique forte 20 qui, par échange de cations, en parfait la déminéralisation et acidifie le lactosérum jusqu'à un pH de l'ordre de 1 à 2. Ce lactosérum acide est alors utilisé comme milieu acide dans l'un et/ou l'autre des électrodialyseurs ED1, ED2 où il perd ses anions et se neutralise progressivement. On dispose donc après passage dans ces électrodialyseurs à trois compartiments d'un lactosérum neutralisé et déminéralisé que l'on peut traiter dans une unité 21 pour recouvrer le lactose.

Dans le cas de la production d'une caséine native par le procédé selon l'invention (figures 2 et 3) le permeat acide (pH 2,8 à 4) déminéralisé et débarrassé des protéines sériques, est également conduit sur une résine échangeuse d'ions cationique forte 22 par laquelle on extrait les derniers cations de ce lactosérum et on abaisse son pH jusqu'à 1 - 2. On dispose alors avantageusement d'un flux acide que l'on introduit dans les compartiments 4 (figure 1A) de l'un et/ou l'autre des électrodialyseurs trois compartiments ED1 - ED2. Le lactosérum est ainsi désanionisé et neutralisé. Il est alors traité dans l'unité 21 permettant d'en extraire le lactose dans une forme immédiatement commercialisable (lactose première cristallisation) et utilisable par exemple dans l'industrie pharmaceutique ou parapharmaceutique.

La figure 5 est bien entendu schématique et ne fait pas apparaître les moyens permettant la circulation et le stockage intermédiaire des flux. Elle n'indique pas non plus les moyens à mettre en oeuvre, permettant de conserver le lactosérum issu de l'étage 11 de filtration, dans les conditions stériles où le traitement 10 l'a placé, tout au long de son parcopurs de déminéralisation et de neutralisation.

## Revendications

1. Procédé de traitement par batch du lait écrémé pour en extraire les différents constituants comprenant une première phase d'acidification du lait maintenu à basse température par électrodialyse dans au moins un électrodialyseur à trois compartiments (ED1) et seconde phase d'extraction de la caséine du lait ainsi acidifié caractérisé en ce que le milieu acide circulant dans chacun des électrodialyseurs trois compartiments (ED1, ED2) est le perméat acide dont le pH est situé entre 1 et 2, issu du lait traité après séparation de la caséine.

2. Procédé selon la revendication 1 caractérisé en ce que le lactosérum partiellement déminéralisé issu de l'extraction de la caséine est passé sur une résine échangeuse d'ions (20) cationique forte pour une décationisation plus poussée avant d'être utilisée comme agent acide dans l'un des électrodialyseurs (ED1, ED2) où il est désanionisé.

3. Procédé selon la revendication 1, caractérisé en ce que la phase d'acidification du lait est réalisée dans deux étages d'électrodialyse, le premier étage (ED1) étant destiné à obtenir un pH de l'ordre de 5 de la totalité du batch, le second étage (ED2) accueillant une fraction du batch issu du premier étage (ED1) jusqu'à obtenir un pH de 2,8 environ et en ce qu'on procède au mélange (8) des deux produits issus des deux étages d'électrodialyse pour obtenir un lait dont le pH est au voisinage du point isoélectrique de la caséine.

4. Procédé selon la revendication 1, caractérisé en ce que la totalité du batch est circulée au travers d'au moins deux étages d'électrodialyse (ED1, ED2) et en ce que préalablement à sa circulation dans le second étage (ED2) le batch de lait issu du premier étage (ED1) est mélangé (R) avec une partie du batch de lait précédemment circulé dans le second électrodialyseur (ED2) de sorte que le pH du lait à l'entrée du second étage est situé sous le point isoélectrique de la caséine.

5. Procédé selon la revendication 4 caractérisé en ce qu'il comprend une seconde phase de traitement du lait acidifié jusqu'à pH 2,8 consistant en une séparation par filtration (11) du lactosérum contenu dans le lait.

6. Procédé selon la revendication 5 caractérisé en ce que la phase de séparation comporte au moins deux étages d'ultrafiltration (12,14) séparés par un étage de microfiltration/diafiltration (13) dont le perméat (13a) contient les protéines sériques.

7. Procédé selon la revendication 5 caractérisé en ce qu'il comprend, avant la filtration, une étape (10) de stérilisation microbiologique.

8. Procédé selon la revendication 5, caractérisé en ce que le perméat (13a, 14a) issu de la phase de séparation par filtration est déminéralisé en passant d'une part, sur une résine cationique (22) forte et d'autre part, dans l'électrodialyseur (ED1, ED2) d'acidification du lait.

9. Procédé selon la revendication 5 caractérisé en ce que le rétentat (15) de la phase de séparation par filtration est neutralisé par circulation de ce dernier dans un électrodialyseur (16) deux compartiments avec ajout d'une base (17) au moment du passage du point isoélectrique de la caséine.

## Claims

1. A method of processing a batch of skimmed milk in order to extract its various constituent parts, the method including a first stage during which the milk maintained at low temperature is acidified by electrodialysis in a three-compartment electrodialyzer (ED1) and a second stage consisting in extracting the casein from the milk acidified in this way, the method being characterized in that the acid medium flowing through each of the three-compartment electrodialyzers (ED1, ED2) is the acid permeate at a pH lying in the range 1 to 2 and derived from processed milk after casein separation.

2. A method according to claim 1, characterized in that the partially deionized whey left after extracting the casein is passed over a strong cationic ion exchange resin (20) for further decationization and is then used as an acid agent in one of the electrodialyzers (ED1, ED2) in which it is deanionized.

3. A method according to claim 1, characterized in that the milk acidification stage is performed in two electrodialysis stages, the first stage (ED1) being intended to bring all of the batch to a pH of about 5, and the second stage (ED2) receiving at least a fraction of the batch from the first stage (ED1) and bringing it to a pH of about 2.8, and in that the two products from the two electrodialysis stages are mixed (8) in order to obtain milk having a pH in the vicinity of the isoelectric point of casein.

4. A method according to claim 1, characterized in that the entire batch is caused to flow through at least two electrodialysis stages (ED1, ED2), and in that prior to causing the batch of milk from the first electrodialyzer (ED1) to flow through the second electrodialyzer (ED2), it is mixed (R) with a portion of the previous batch of milk to flow through the second electrodialyzer (ED2) such that the pH of the milk entering the second electrodialyzer is situated beneath the isoelectric point of casein.

5. A method according to claim 4, characterized in that it includes a second stage of processing the milk acidified to pH 2.8, the second stage consisting in separating out the whey contained in the milk by filtering (11).

6. A method according to claim 5, characterized in that the separation stage includes at least two ultrafiltering stages (12, 14) with an intervening microfiltering and/or diafiltering stage (13) from which the permeate (13a) contains the serum proteins.

7. A method according to claim 5, characterized in that it includes a stage (10) of microbiological sterilization prior to the filtering stages.

8. A method according to claim 5, characterized in that the permeate (13a, 14a) from the separation by filtering stage is deionized by passing firstly over a strong cationic resin (22) and secondly through the electrodialyzer (ED1, ED2) used for acidifying the milk.

9. A method according to claim 5, characterized in that the residue (15) from the separation by filtering stage is neutralized by causing it to flow through a two-compartment electrodialyzer (16) and by adding a base (17) as it passes through the isoelectric point of casein.

## Patentansprüche

1. Verfahren zur chargenweisen Behandlung von Magermilch, um aus dieser die verschiedenen Bestandteile zu extrahieren, umfassend eine erste Phase der Säuerung der auf niedriger Temperatur gehaltenen Milch durch Elektrodialyse in mindestens einem drei Kammern umfassenden Elektrodialysator (ED1) und eine zweite Phase der Extraktion des Kaseins aus der so gesäuerten Milch, dadurch **gekennzeich****net**, daß das in jedem der drei Kammern umfassenden Elektrodialysatoren (ED1, ED2) zirkulierende saure Milieu das saure Permeat ist, dessen pH-Wert zwischen 1 und 2 beträgt und das aus der behandelten Milch nach dem Abtrennen des Kaseins resultiert.

2. Verfahren nach Anspruch 1, dadurch **gekennzeichnet,** daß das teilweise demineralisierte Lactoserum, das aus der Extraktion des Kaseins resultiert, über ein stark kationisches Ionenaustauschharz (20) geleitet wird, um eine stärkere Dekationisierung zu erreichen, bevor es als saures Medium in einem der Elektrodialysatoren (ED1, ED2) verwendet wird, wo es deanionisiert wird.

3. Verfahren nach Anspruch 1, dadurch **gekennzeichnet,** daß die Phase der Säuerung der Milch in zwei elektrodialytischen Stufen ausgeführt wird, wobei die erste Stufe (ED1) dazu bestimmt ist, einen pH-Wert der gesamten Charge in der Größenordnung von 5 zu erreichen und wobei die zweite Stufe (ED2) einen Teil der aus der ersten Stufe (ED1) resultierenden Charge aufnimmt, um einen pH-Wert von ungefähr 2,8 zu erreichen, und daß man die aus den beiden elektrodialytischen Stufen resultierenden Produkte mischt (8), um eine Milch zu erhalten, deren pH-Wert nahe dem isoelektrischen Punkt des Kaseins liegt.

4. Verfahren nach Anspruch 1, dadurch **gekennzeichnet,** daß die gesamte Charge mindestens zwei elektrodialytische Stufen (ED1, ED2) durchläuft und daß die aus der ersten Stufe (ED1) resultierende Milchcharge vor dem Durchlaufen der zweiten Stufe (ED2) mit einem Teil der Milchcharge vermischt wird (R) die vorher den zweiten Elektrodialysator (ED2) durchlaufen hat, derart, daß der pH-Wert der Milch beim Eintritt in die zweite Stufe unter dem Isoelektrischen Punkt des Kaseins liegt.

5. Verfahren nach Anspruch 4, dadurch **gekennzeichnet,** daß es eine zweite Behandlungsphase für die bis zu einem pH-Wert von 2,8 gesäuerte Milch darin besteht, das in der Milch enthaltene Lactoserum durch Filtration (11) zu trennen.

6. Verfahren nach Anspruch 5, dadurch **gekennzeichnet,** daß die Phase der Trennung mindestens zwei Ultrafiltrationsstufen (12, 14) umfaßt, die durch eine Stufe der Microfiltration/Diafiltration (13) getrennt sind, deren Permeat (13a) die Serumproteine enthält.

7. Verfahren nach Anspruch 5, dadurch **gekennzeichnet,** daß es vor der Filtration eine Stufe (10) der microbiologischen Sterilisation umfaßt.

8. Verfahren nach Anspruch 5, dadurch **gekennzeichnet,** daß das aus der Phase der Trennung durch Filtration resultierende Permeat (13a, 14a) demineralisiert wird, indem es einerseits über ein stark kationisches Harz (22) geführt wird und andererseits in einen Elektrodialysator (ED1, ED2) zur Säuerung der Milch geleitet wird.

9. Verfahren nach Anspruch 5, dadurch **gekennzeichnet,** daß das aus der Phase der Separation durch Filtration resultierende Retentat (15) neutralisiert wird, in dem Letzteres in einem Zweikammer-Elektrodialysator (16) zirkuliert unter Hinzufügen einer Base (17) im Augenblick des Erreichens des isoelektrischen Punktes des Kaseins.
